Europäisches Patentamt

European Patent Office

Office européen des brevets

(11) Veröffentlichungsnummer: **0 137 208 B1**

## (12) EUROPÄISCHE PATENTSCHRIFT

(45) Veröffentlichungstag der Patentschrift: **29.05.91**

(51) Int. Cl.⁵: **H04N 1/393**

(21) Anmeldenummer: **84109527.6**

(22) Anmeldetag: **10.08.84**

(54) Verfahren zur Umwandlung eines Eingangsbitstromes.

(30) Priorität: **25.08.83 JP 154228/83**

(43) Veröffentlichungstag der Anmeldung:
**17.04.85 Patentblatt 85/16**

(45) Bekanntmachung des Hinweises auf die
Patenterteilung:
**29.05.91 Patentblatt 91/22**

(84) Benannte Vertragsstaaten:
**DE FR GB IT**

(56) Entgegenhaltungen:
**EP-A- 0 012 173**
**US-A- 4 071 855**
**US-A- 4 366 508**
**US-A- 4 394 693**
**US-A- 4 412 252**

(73) Patentinhaber: **International Business Machines Corporation**
**Old Orchard Road**
**Armonk, N.Y. 10504(US)**

(72) Erfinder: **Tung, Min-Hsiung George**
**2519 Lawton Bluff Rd.**
**Matthews N.C. 28105(US)**
Erfinder: **Yanagisawa, Hiroshi**
**6-1-501 Rainbow Heights 838, Isogo-Cho**
**Isogo-Ku Yokohama(JP)**

(74) Vertreter: **Kirchhof, Norbert, Ing. grad.**
**Schönaicher Strasse 220**
**W-7030 Böblingen(DE)**

EP 0 137 208 B1

**Beschreibung**

Verfahren zum Verkleinern oder Vergrößern eines mittels eines Eingangsbitstromes erzeugten visuellen Bildes durch Umwandlung dieses Eingangsbitstromes in einen Bitstrom mit einer ausgewählten Anzahl von Bits in Abhängigkeit von einem vorgegebenen Umwandlungsverhältnis ohne der Notwendigkeit einer Bitumwandlungstabelle.

Es wurde eine periodische Unterdrückung oder ein periodisches Einfügen von Bits in einem bzw. in einen Datenstrom vorgeschlagen, der eine Druckelementlinie eines Bildes darstellt. Beispielsweise werden in einem Datenstrom Bits in jeder fünften Bitposition unterdrückt in Übereinstimmung mit einem Verkleinerungsverhältnis von 4 : 5. nachteilig hierbei ist es, daß die jeweils unterdrückten fünften Bits wichtig sind, so daß sie in dem verkleinerten Bitstrom verlorengehen, wodurch die Druckqualität gemindert wird.

Ein anderer Vorschlag (Japanische Patentanmeldung 55-114 914) verwendet eine Bitumwandlungstabelle. Die Tabelle ist aufgestellt zum Minimieren des Verlustes von wichtigen Bitübergängen, d.h. 1 → 0 oder 0 → 1 Übergang des Eingangsbildes. Im Falle der Umwandlung der B4-Größe, die eine Breite von 256 mm aufweist, auf eine A4-Größe mit einer Breite von 210 mm, wird das Verkleinerungsverhältnis dargestellt durch die Formel

$$\frac{210}{256} = 0,8203.$$

Um das Verhältnis 0,8203 zu realisieren, ist ein Verkleinerungsverhältnis von 5,6 gewählt, da dieses Verhältnis den nächstliegensten Wert darstellt, nämlich

$$\frac{5}{6} = 0,8333.$$

Der Eingangsbitstrom, der eine horizontale Abtastlinie in der Reihenrichtung der B4-Bildgröße darstellt, ist in mehrere 6-Bitgruppen unterteilt. Die Tabelle ist zusammengestellt, um alle Kombinationen von 6-Bit- bis 5-Bit-Umwandlungen zu enthalten, ohne eine Einbuße in der Bildqualität. Jede 6-Bitgruppe ist für das Adressieren des Zugangs zur Tabelle verwendet. Nachteilig ist es hierbei, daß die Tabelle einen relativ großen Speicherraum erfordert.

Es ist ferner ein Verfahren zur Umwandlung der Bildauflösung eines gespeicherten Bildes in eine niedrigere Bildauflösung des zu druckenden Bildes bekannt (EP-A-0 012 173), das eine in einem Festwertspeicher gespeicherte Bildumwandlungstabelle benötigt.

Der Erfindung liegt die Aufgabe zugrunde, die Länge oder Dichte eines Eingangsbitstromes, der ein Bildmuster darstellt, in eine andere Länge bzw. Dichte umzuwandeln, entsprechend eines gegebenen Umwandlungsverhältnisses, ohne daß wichtige Bits bei der Umwandlung verlorengehen und ohne daß ein großer Speicherraum für eine Umwandlungstabelle notwendig ist. Diese Aufgabe wird dadurch gelöst, daß in Abhängigkeit vom vorgegebenen Umwandlungsverhältnis (A bis F in 10) die Anzahl von Datenbits bestimmt wird, die in den Eingangsdatenstrom (in 1) einzufügen sind oder aus demselben auszulassen sind, um den Eingangsdatenstrom in Bitgruppen von einer Anzahl gleich der Anzahl der genannten Datenbits zu unterteilen, daß kontrolliert wird (1 und 6), ob diejenigen benachbarten Bits, die jeweils zu benachbarten Bitgruppen gehören, den gleichen Wert aufweisen und daß in Abhängigkeit von dieser Kontrolle ein zusätzliches Bit zwischen aufeinanderfolgende Bits eingefügt oder ausgelöscht wird (12, 10), um die im Bild wichtigen Kanten nicht zu verlieren.

Das erfindungsgemäße Verfahren erfordert, daß das Bild eine Mehrzahl von Druckelementlinien aufzuweisen hat. Jede dieser Druckelementlinien wird der Vorrichtung serial geliefert. Die Vorrichtung empfängt auch das ausgewählte Umwandlungsverhältnis und bestimmt die Anzahl von Datenbits, die in den Eingangsbitstrom einzufügen sind oder aus demselben auszuscheiden sind, um den Eingangsbitstrom in eine Mehrzahl von Bitgruppen zu unterteilen, in Übereinstimmung mit dem Umwandlungsverhältnis. Die Anzahl der Bitgruppen ist gleich der Anzahl von Datenbits, die einzufügen oder auszulassen sind. Die Bits in jeder Bitgruppe werden aufeinanderfolgend bestimmt, wenn die benachbarten zwei Bits den gleichen Binärwert aufweisen. Eine Erkennungsschaltung dient dem Erzeugen eines ersten Ausgangssignales, wenn die benachbarten zwei Bits den gleichen binären Wert einnehmen und erzeugt zweite Ausgangssignale, wenn die benachbarten zwei Bits einen unterschiedlichen binären Wert aufweisen. Eine weitere Schaltung ist vorgesehen für das Ansprechen auf das Auftreten des ersten Ausgangssignales in der Bitgruppe, um

2

eine Einfügung eines Bits zwischen zwei benachbarte Bits oder ein Ausscheiden eines Bits zu steuern.

Das Einfügen eines Bits in die Bitgruppe und das Ausscheiden eines Bits verhindert für diese Bitgruppe eine we tere Einfüg- und Ausscheidoperation.

Wenn das erste Ausgangssignal während des aufeinanderfolgenden Vergleichens zweier Bits einer Bitgruppe nicht erzeugt wird, das ist, wenn alle aufeinanderfolgenden zwei Bitkombinationen in der Bitgruppe einen Bitübergang anzeigen, z.B. das erste Bit der zwei Bits hat einen binären Wert von Eins und das zwe te einen binären Wert von Null, wird am Ende der Bitgruppe entweder ein Bit eingefügt oder ausgelassen.

Einzelheiten der Erfindung sind nachstehend anhand eines in den Figuren veranschaulichten Ausführungsbeispieles beschrieben. Es zeigen:

Fig. 1    ein Blockdiagramm einer Schaltung zur Umwandlung der Anzahl von Bits eines Eingangsbitstromes,

Fig. 2    Schemata zum Vergleich der Erfindung mit dem Stand der Technik,

Fig. 3    ein Impulsdiagramm für die Schaltung nach Fig. 1,

Fig. 4    eine Schaltung für einen Eingangsschaltkreis und

Fig. 5    Impulsdiagramme zur Veranschaulichung der Wirkungsweise der Torschaltung für ein Einfügen oder ein Auslassen von Bits.

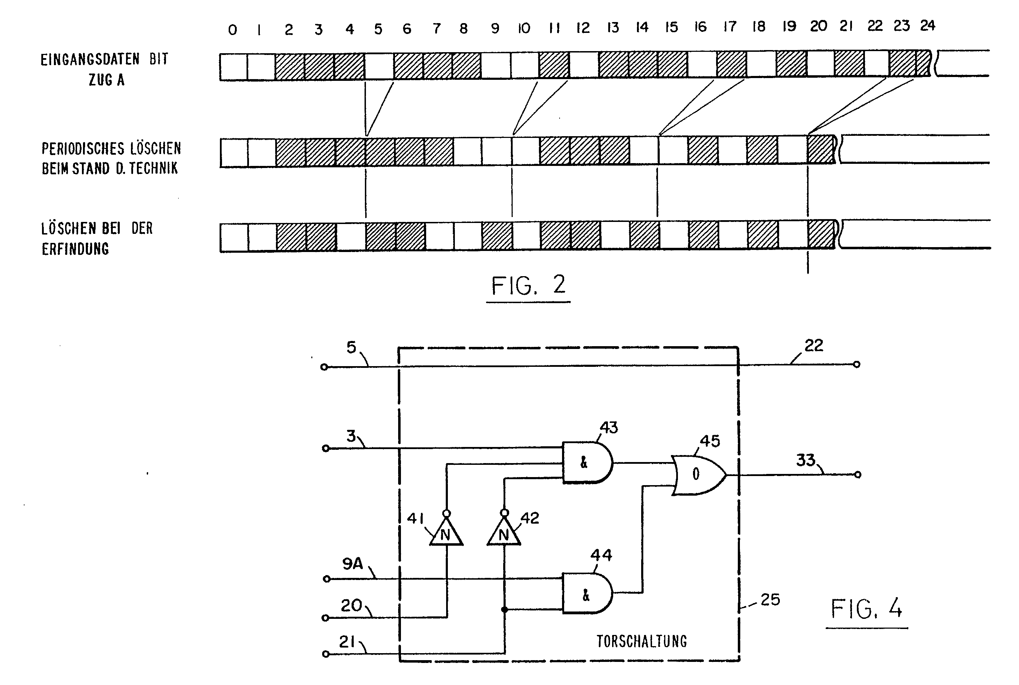

Das Schieberegister 1 mit einem serialen Ein- und parallelen Ausgang hat zwei Stufen $Q_A$ und $Q_B$. Es wird angenommen, daß der Eingangsbitstrom, wie in A der Fig. 2 gezeigt ist, dem Schieberegister 1 über die Eingangsleitung 2 serial zugeführt wird. Die Taktsignale der Frequenz f werden dem Schieberegister 1 mittels der Eingangsleitung 3 zugeführt. Die Ausgangsleitungen 4 und 5 des Schieberegisters 1 sind an eine exklusive ODER/Inverterschaltung 6 angeschlossen, deren Ausgang 7 mit dem Eingang der UND-Schaltung 8 verbunden ist. Der Ausgang 5 des Schieberegisters 1 ist auch mit einem Eingang der Ausgangsschaltung 9 verbunden. Die Taktsignale werden auch dem 6-Bitraten-Vervielfacher 10 zugeführt. Der Vervielfacher besitzt Steuereingangsanschlüsse A bis F und erzeugt Ausgangssignale auf seiner Ausgangsleitung 11. Die detaillierte Wirkungsweise des Vervielfachers wird weiter unten beschrieben. Die Ausgangsleitung 11 ist mit dem Setzeingang der bistabilen Kippschaltung 12 und mit einem Eingang der UND-Schaltung 13 verbunden. Die Ausgangsleitung 12A der bistabilen Kippschaltung 12 ist mit einem anderen Eingang e ner jeden UND-Schaltung 8 und 13 verbunden. Die Ausgänge der UND-Schaltungen 8 und 13 sind an die ODER-Schaltung 14 angeschlossen. Der Ausgang der UND-Schaltung 8 steht mit dem Rücksetzeingang der bistabilen Kippschaltung 12 in Verbindung. Der Taktsignaleingang der bistabilen Kippschaltung 12 ist mit der Taktsignalleitung 3 verbunden, die auch an die Ausgangsschaltung 9 angeschlossen ist. Der Ausgang 15 der ODER-Schaltung 14 ist mit einem Eingang einer jeden UND-Schaltung 16, 17 verbunden. Die UND-Schaltung 16 besitzt einen weiteren Eingang 18 und die UND-Schaltung 17 einen weiteren Eingang 19. Der Ausgang 20 der UND-Schaltung 16 und der Ausgang 21 der UND-Schaltung 17 sind mit der Ausgangsschaltung 9 verbunden.

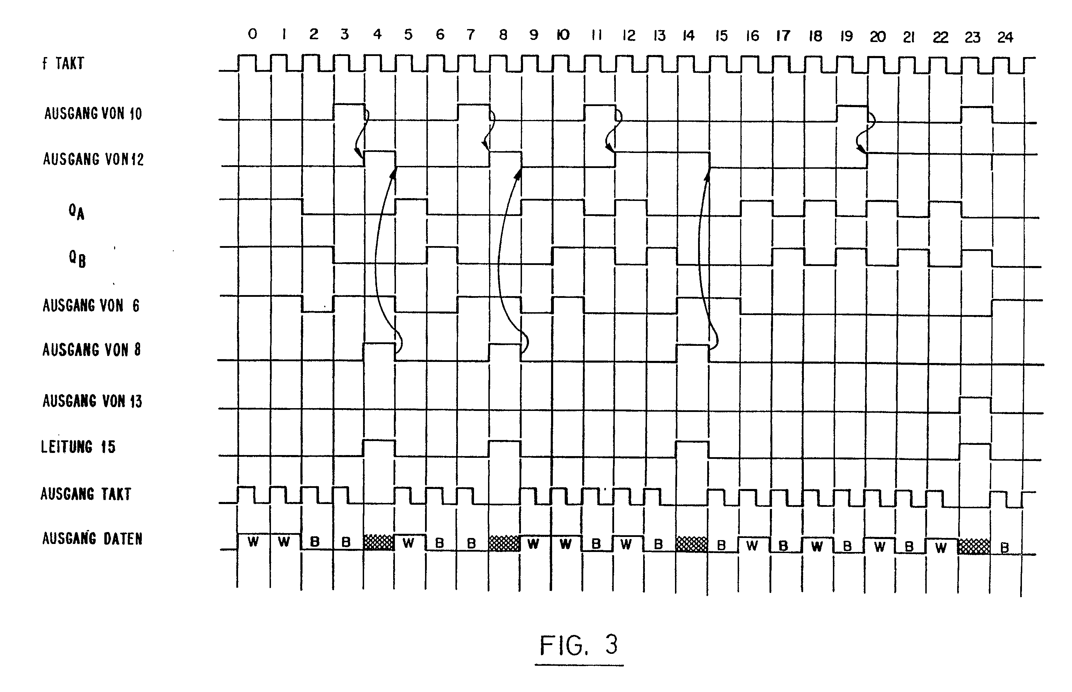

Der 6-Bitraten-Vervielfacher 10 bestimmt die Anzahl von Datenbits, die einzufügen oder auszulassen sind in bzw. aus den 64 Bits des Eingangsbitstromes in Abhängigkeit von den zugeführten Steuersignalen A bis F und erzeugt Steuerimpulszüge auf der Ausgangsleitung 11. Die Steuersignale des Vervielfachers 10 werden entsprechend der Tabelle 24 erzeugt, die auf eines mehrerer Umwandlungsverhältnisse anspricht, wie $B_4 \leftrightarrow A_4$, $A_3 \leftrightarrow A_4$, $A_3 \leftrightarrow B_4$, $240 \leftrightarrow 203$, usw. Wie aus Fig. 3 hervorgeht, unterteilt der Steuerimpulszug des Vervielfachers 10 den Eingangsbitstrom in mehrere Bitgruppen, wobei die Anzahl gleich ist der Anzahl der ausgelassenen oder eingefügten Bits. Beispielsweise zeigt das Muster des Steuerimpulszuges die Anzahl der ausgelassenen oder eingefügten Bits pro 64 Bits an.

Es wird angenommen, daß ein Umwandlungsverhältnis von 52/64 bestimmt ist durch das Eingangsmuster 001100, das den Anschlüssen F bis A zugeführt wird. Der Eingangsbitstrom (Fig. 2) wird der Eingangsleitung 2 zugeführt. Das Verhältnis 52/64 entspricht ungefähr der Verkleinerung der B4-Größe auf eine A4-Größe wie folgt:

$$\frac{52}{64} = \frac{1}{2} + \frac{1}{4} + \frac{1}{16} = 0,5 + 0,25 + 0,0625 = 0,8125 =$$

$$= 0,81712 = \frac{A4}{B4}.$$

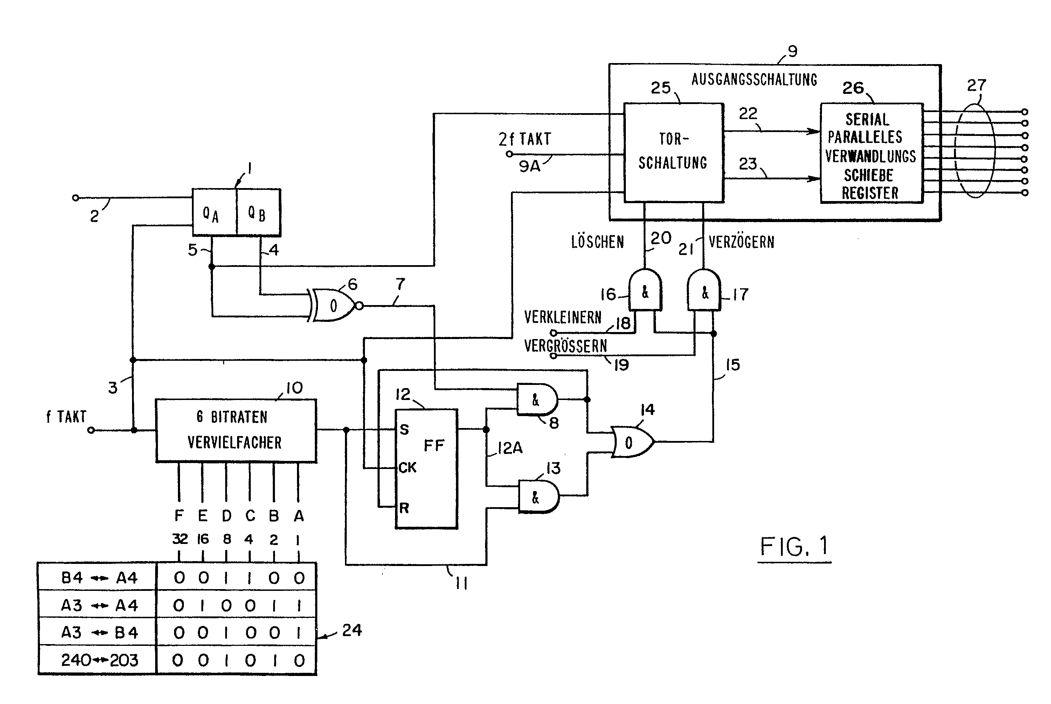

Verschiedene Eingangsmuster bestimmen unterschiedliche Umwandlungsverhältnisse, wie in Fig. 1 dargestellt ist. Das Verhältnis 52/64 zeigt an, daß zwölf Bits aus 64 Bits auszulassen sind, d.h. daß Bits von

EP 0 137 208 B1

jedem 16. Eingangsbit auszuscheiden sind.

Der Steuerimpulszug des Vervielfachers 10 teilt die 16 Bits in drei Gruppen auf.

Das Schieberegister 1 und die exklusive ODER/Inverterschaltung 6 bestimmen, wenn die benachbarten zwei Bits in der Bitgruppe den gleichen Binärwert aufweisen. Genauer gesagt wird der Eingangsbitstrom serial den Stufen $Q_A$ und $Q_B$ zugeführt. Die Stufe $Q_A$ speichert das augenblickliche Datenbit, während die Stufe $Q_B$ das alte Datenbit speichert.

Beide Datenbits werden der exklusiven ODER/Inverterschaltung 6 zugeführt, die hochpegelige Ausgangssignale erzeugt, wenn immer beide Datenbits gleich sind und niederpegelige Ausgangssignale erzeugt, wenn immer beide Datenbits einen unterschiedlichen Binärwert aufweisen (Fig. 3). In diesem Beispiel erzeugt die exklusive ODER/Inverterschaltung 6 hochpegelige Signale während der Perioden $T_0$-$T_1$, $T_3$-$T_4$, $T_7$-$T_8$, usw.

Die bistabile Kippschaltung 12 wird durch die Hinterflanke oder abwärts gerichtete Flanke des Steuerimpulszuges gesetzt, um ein hochpegeliges Signal auf ihrer Ausgangsleitung 12A zu erzeugen. Die bistabile Kippschaltung 12 wird am Beginn der Perioden $T_4$, $T_8$, $T_{12}$ und $T_{20}$ gesetzt. Der Vervielfacher 10 und die bistabile Kippschaltung 12 sprechen auf das vorgegebene Umwandlungsverhältnis an, um die Anzahl von Datenbits zu bestimmen, die einzufügen oder auszulassen sind in bzw. aus dem Eingangsbitstrom, um den Eingangsbitstrom in mehrere Bitgruppen zu unterteilen. Der Setzzustand der b stabilen Kippschaltung 12 erlaubt das nachfolgende Verkleinern oder Vergrößern, wenn immer beide benachbarten Datenbits gleich sind. Die bistabile Kippschaltung 12 wird zurückgesetzt durch ein hochpegeliges Signal der UND-Schaltung 8. Dieses Signal ist ein Torsignal, das einen Verkleinerungs- oder Vergrößerungsvorgang anzeigt.

Wie weiter oben erwähnt, wird die UND-Schaltung 8 durch die Ausgänge der exklusiven ODER/Inverterschaltung 6 und die bistabile Kippschaltung 12 gesteuert. Die UND-schaltung wird aktiviert, wenn immer beide Eingänge auf hohem Pegel sind. Dies tritt ein beim ersten Auftreten des hochpegeligen Signales auf der Leitung 7 nach dem Auftreten des hochpegeligen Signales am Ausgang der bistabilen Kippschaltung 12. Diese Aktivierung der UND-Schaltung 8 ist in den Perioden $T_4$, $T_8$, und $T_{14}$ (Fig. 3) dargestellt. Die hochpegeligen Signale der UND-Schaltung 8 bereiten die UND-Schaltungen 16 und 17 über die ODER-Schaltung 14 vor und setzen die bistabile Kippschaltung 12 zurück, um eine weitere Aktivierung der UND-Schaltung 8 in dieser Bitgruppe zu unterbinden. Die Eingänge 18 und l9 der UND-Schaltungen 16 und 17 werden wahlweise beaufschlagt mit dem Verkleinerungssignal bzw. dem Vergrößerungssignal. Das Signal "Verkleinerung" wird zugeführt, wenn eine Verkleinerung des Originalbildes erwünscht ist, während das Signal "Vergrößern" zugeführt wird, wenn eine Vergrößerung des Originalbildes gewünscht wird.

Beim Verkleinern ist das Verkleinerungssignal auf seinem oberen Pegel, während das Vergrößerungssignal auf seinem unteren Pegel gehalten wird, wodurch die UND-Schaltung 16 aktiviert wird, um die Ausgangsschaltung 9 zu beaufschlagen, die während den Perioden, $T_4$, $T_8$, $T_{14}$ und $T_{23}$ Bitsignale unterbindet.

Haben alle der benachbarten zwei Bitkombinationen einer Bitgruppe unterschiedliche binäre Werte, wird ein Bit eingefügt oder ausgelassen beim Auftreten des nächsten hochpegeligen Signales des Vervielfachers 10. Ein Beispiel für eine derartige Bitgruppe ist durch die Bitpositionen 18 bis 23 im Eingangsbitstrom A in Fig. 2 dargestellt, bei dem alle der benachbarten zwei Bitkombinationen unterschiedliche binäre Werte aufweisen und deshalb die exklusive ODER/Inverterschaltung 6 kein hochpegeliges Signal an ihrer Ausgangsleitung 7 erzeugt und die UND-Schaltung 8 nicht aktiviert wird. Um ein Bit einzufügen oder auszulassen, wird die UND-Schaltung 13 aktiviert am Beginn der Zeitperiode 23 durch das hochpegelige Signal der bistabilen Kippschaltung 12 und das hochpegelige Signal auf der Ausgangsleitung 11. Die bistabile Kippschaltung 12 hält das hochpegelige Signal aufrecht auf ihrer Ausgangsleitung 12A, da die bistabile Kippschaltung 12 durch die UND-Schaltung 8 nicht zurückgesetzt wird. Das hochpegelige Signal der UND-Schaltung 13 wird beiden UND-Schaltungen 16 und 17 über die ODER-Schaltung 14 zugeführt.

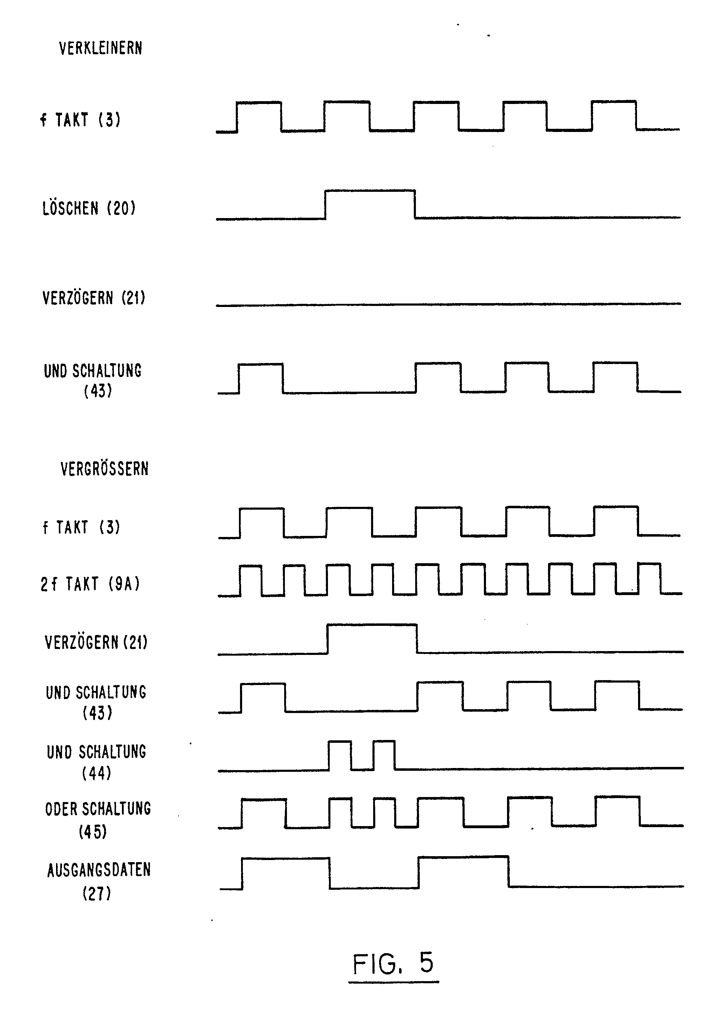

Die Ausgangsschaltung 9 enthält die Torschaltung 25 und ein serial paralleles Umwandlungs/Schieberegister 26. Einzelheiten der Torschaltung 25 sind in Fig. 4 gezeigt. Die Torschaltung 25 enthält die Inverterschaltungen 41, 42, UND-Schaltungen 43, 44 und die ODER-Schaltung 45, um die f-Taktsignale und die 2f-Taktsignale wahlweise durchzuschleusen in Übereinstimmung mit dem Auslaßsignal auf der Ausgangsleitung 20 und dem Verzögerungssignal auf der Ausgangsleitung 21 (Fig. 5). Bei einem Verkleinern ist die UND-Schaltung 43 nicht aktiviert, wenn immer das Auslaßsignal auf der Leitung 20 erzeugt wird, wodurch die f-Taktsignale während dieser Zeit unterbunden werden. Der Taktsignalzug auf der Leitung 23 wird als Mustersignal verwendet oder als Schiebesignal im Block 26, der das serial parallele Umwandlungs/Schieberegister darstellt. Die Datenbits während der obigen Zeitperiode werden durch das Register 26 geprüft, so daß die Anzahl von Bits im Eingangsdatenstrom verkleinert wird.

Beim Vergrößern wird die Anzahl der Taktimpulse auf der Ausgangsleitung 23 erhöht. Wenn das

4

Verzögerungssignal auf der Leitung 21 erscheint, läßt die UND-Schaltung 44 die 2f-Taktimpulse, d.h. zwei Taktimpulse während dieser Zeitperiode, durch. Außer in der Zeit, während das Verzögerungssignal erzeugt wird, läßt die UND-Schaltung 43 die f-Taktimpulse zur ODER-Schaltung 45 gelangen. Beide Taktimpulszüge von den UND-Schaltungen 43, 44 sind Null, wie in Fig. 4 dargestellt ist, wobei die Anzahl der Taktimpulse während dieser Zeitspanne zunimmt, so daß ein Datenbit während dieser Zeitspanne zweimal getastet wird, wodurch die Anzahl der Datenbits erhöht wird.

Die Schaltung, die die UND-Schaltungen 8, 13, 16 und 17, die ODER-Schaltung 14 und die Ausgangsschaltung 9 enthält, antwortet auf die Ausgangssignale der exklusiven ODER/Inverterschaltung 6 und der bistabilen Kippschaltung 12, um ein zusätzliches Bit zwischen die benachbarten zwei Bits einzufügen oder auszulassen.

In Fig. 2 ist das verkleinerte Ausgangsbitmuster C der Erfindung mit dem Ausgangsbitstrom B, der durch die bekannte periodische Bitauslöschung verkleinert ist, gezeigt. Die Verkleinerung von der Bildgröße B4 auf die Bildgröße A4 ist dargestellt. Der Bitstrom B wird durch periodisches Auslassen eines jeden sechsten Eingangsbits in Übereinstimmung mit dem Verkleinerungsverhältnis 5/6 erhalten. Es ist ersichtlich, daß die Bitübergänge "1 → 0" zwischen der Position 4 und 5, der Bitübergang "0 → 1" zwischen den Positionen 10 und 11, der Bitübergang "1 → 0" zwischen den Positionen 11 und 12, der Bitübergang "0 → 1" zwischen den Positionen 16 und 17, der Bitübergang "1 → 0" zwischen den Positionen 17 und 18 nicht in dem Ausgangsbitstrom B der bekannten Technik enthalten sind.

Beim Ausgangsbitstrom C, der entsprechend der Erfindung verkleinert ist, sind alle Bitübergänge, die in dem Bitstrom B verloren gingen, aufrechterhalten, wobei die Druckqualität im Vergleich zum Bitstrom B wesentlich verbessert ist. Es ist besonders wünschenswert, diese ursprünglichen Bitübergänge im Ausgangsbitstrom aufrechtzuerhalten, da der Ausgangsbitstrom in einer Datenverarbeitungseinheit weiterverarbeitet wird.

Bisher wurde das Vergrößern oder Verkleinern eines Bildes in der Reihenrichtung beschrieben.

Ein Vergrößern oder Verkleinern eines Bildes in der Spaltenrichtung ist ausführbar durch Speicherung des Bildes, wobei die Reihenrichtung desselben durch die Schaltung in Fig. 1 einem Speicher zugeführt wurde, durch Zuführung von Datenbits in der Spaltenrichtung des gespeicherten Bildes zur Ausgangsleitung 2 des Schieberegisters 1, wie der Eingangsdatenstrom, und durch Verarbeitung aller Spalten des gespeicherten Bildes in der eben beschriebenen Weise.

## Ansprüche

1. Verfahren zum Verkleinern oder Vergrößern eines mittels eines Eingangsbitstromes erzeugten visuellen Bildes durch Umwandlung dieses Eingangsbitstromes in einen Bitstrom mit einer ausgewählten Anzahl von Bits in Abhängigkeit von einem vorgegebenen Umwandlungsverhältnis ohne der Notwendigkeit einer Bitumwandlungstabelle, dadurch gekennzeichnet,

daß in Abhängigkeit vom vorgegebenen Umwandlungsverhältnis (A bis F in 10) die Anzahl von Datenbits bestimmt wird, die in den Eingangsdatenstrom (in 1) einzufügen sind oder aus demselben auszulassen sind, um den Eingangsdatenstrom in Bitgruppen von einer Anzahl gleich der Anzahl der genannten Datenbits zu unterteilen,

daß kontrolliert wird (1 und 6), ob diejenigen benachbarten Bits, die jeweils zu benachbarten Bitgruppen gehören, den gleichen Wert aufweisen und

daß in Abhängigkeit von dieser Kontrolle ein zusätzliches Bit zwischen aufeinanderfolgende Bits eingefügt oder ausgelöscht wird (12, 10), um die im Bild wichtigen Kanten nicht zu verlieren.

## Claims

1. Method of reducing or enlarging a visual image, produced by means of an input bit stream, by converting said input bit stream into a bit stream with a predetermined number of bits as a function of a given conversion ratio without requiring a bit conversion table,

characterized in that a given conversion ratio (A to F in 10) is used to determine the number of data bits to be inserted into or to be deleted from the input data stream (1), in order to partition the input data stream into a number of bit groups equalling that of the said data bits,

that a check is made (1 and 6) to determine whether the adjacent bits which are associated with adjacent bit groups have the same value, and

that in response to that check, an additional bit is inserted or deleted between adjacent bits (12, 10) in order to maintain the essential edges within the image.

**Revendications**

1. Procédé pour réduire ou agrandir une image optique produite au moyen d'un flux binaire d'entrée, par conversion de ce flux binaire d'entrée en un flux binaire possédant un nombre sélectionné de bits, en fonction d'un rapport prédéterminé de conversion sans qu'il soit nécessaire d'utiliser un tableau de conversion binaire, caractérisé en ce
qu'on détermine, en fonction du rapport prédéterminé de conversion (A à F en 10), le nombre des bits de données, qui doivent être insérés dans le flux de données d'entrée (en 1) ou doivent être éliminés de ce flux, pour subdiviser le flux des données d'entrée en des groupes de bits en un nombre égal au nombre desdits bits de données,
qu'on vérifie (1 et 6) si les bits voisins, qui appartiennent respectivement à des groupes de bits voisins, possèdent la même valeur, et
qu'en fonction de ce contrôle, on insère ou on efface (12, 10) un bit supplémentaire entre des bits successifs afin de ne pas perdre les bords importants dans l'image.

FIG. 1

| | F | E | D | C | B | A | |
|---|---|---|---|---|---|---|---|
| | 32 | 16 | 8 | 4 | 2 | 1 | |
| B4 ↔ A4 | 0 | 0 | 1 | 1 | 0 | 0 | |
| A3 ↔ A4 | 0 | 1 | 0 | 0 | 1 | 1 | |
| A3 ↔ B4 | 0 | 0 | 1 | 0 | 0 | 1 | 24 |
| 240 ↔ 203 | 0 | 0 | 1 | 0 | 1 | 0 | |

EP 0 137 208 B1

FIG. 2

EINGANGSDATEN BIT
ZUG A

PERIODISCHES LÖSCHEN
BEIM STAND D. TECHNIK

LÖSCHEN BEI DER
ERFINDUNG

FIG. 4

TORSCHALTUNG

FIG. 3

VERKLEINERN

f TAKT (3)

LÖSCHEN (20)

VERZÖGERN (21)

UND SCHALTUNG
(43)

VERGRÖSSERN

f TAKT (3)

2f TAKT (9A)

VERZÖGERN (21)

UND SCHALTUNG
(43)

UND SCHALTUNG
(44)

ODER SCHALTUNG
(45)

AUSGANGSDATEN
(27)

FIG. 5